# EUROPEAN PATENT APPLICATION

(11) **EP 1 256 556 A1**
(43) Date of publication of application: **13.11.2002**
(21) Application number: 01111365.1
(22) Date of filing: 09.05.2001
(51) Int. Cl.: C03C 8/02

(54) **Porcelain enamel composition**

(71) Applicant: Ferro France S.A.R.L., 52115 Saint Dizier Cedex (FR)
(72) Inventor: Eckmann, Jean-Christophe, 52100 Saint-Dizier (FR); Oumoumeme, Moha Ait Ali, 52100 Saint Dizier (FR); Roques, Francois, 51300 Vitry le Francois (FR)
(74) Representative: Reinhardt, Markus, Dipl.-Ing.

(57) **Abstract**

The present invention provides a composition for use in forming an opaque porcelain enamel coating on a metal substrate. A porcelain enamel coating formed using a composition according to the invention readily adheres to metal substrates such as, for example, steel, that are degreased-only. Furthermore, such a porcelain enamel coating displays an acid resistance of A according to ISO 2722 and good easy-to-clean properties. The composition according to the invention includes a glass component including by weight from about 45% to about 55% SiO₂, from about 8% to about 17% B₂O₃, from about 1.8% to about 17.7% SrO + BaO, from about 1.9% to about 10% Li₂O, up to about 6% ZrO₂, from about 2% to about 11% TiO₂, from about 1.5% to about 6% K₂O, from about 1% to about 4% MoO₃, from about 0.3% to about 13% Na₂O, up to about 2% NiO, up to about 3% Al₂O₃, up to about 2.9% MnO, up to about 0.8% CoO, up to about 3% MgO, up to about 5% CaO, and up to about 2% Sb₂O₃.

## Description

### Field of Invention

The present invention provides a porcelain enamel composition. More particularly, the present invention provides a composition for use in forming an opaque porcelain enamel coating that does not require the presence of cerium oxide to obtain opacity.

### Background of the Invention

Frit compositions are known that can be used to form opaque porcelain enamel coatings on metal substrates that exhibit good acid resistance and good easy-to-clean properties. Some of these prior art frit compositions use cerium oxide as an opacifier. For example, Saad et al., U.S. Pat. No. 5,382,552, discloses an alkali silicate frit composition that contains 12% to 30% by weight of rare earth oxides having an atomic number of 57-60, with cerium oxide being the preferred rare earth oxide. Cerium oxide is relatively expensive and, as noted in Saad et al., frit compositions containing substantial amounts of cerium oxide can be difficult to smelt and fire to a uniform thickness.

Oxides other than cerium oxide have been used as opacifiers in prior art frit compositions. For example, Sb₂O₃, TiO₂, and ZrO₂ have been used as opacifiers in porcelain enamel compositions. Unfortunately, frits containing Sb₂O₃ or ZrO₂ tend to exhibit less than desired acid resistance and thus have generally been limited to ground coats or base coats which must be coated with another layer of enamel (i.e., a cover coat) having greater acid resistance. TiO₂ opacified frits do not readily adhere to metals and thus their use has generally been limited to cover coats.

### Summary of Invention

The present invention provides a composition for use in forming an opaque porcelain enamel coating that does not require the presence of cerium oxide to obtain opacity. An opaque porcelain enamel coating formed by firing the composition according to the invention readily adheres to metal substrates such as, for example, sheet steel, that have been degreased-only. Furthermore, such a porcelain enamel coating displays an acid resistance of A or better according to ISO 2722 and exhibits good easy-to-clean properties.

The composition according to the invention comprises a glass component comprising by weight from about 45% to about 55% SiO₂, from about 8% to about 17% B₂O₃, from about 1.8% to about 17.7% SrO + BaO, from about 1.9% to about 10% Li₂O, up to about 6% ZrO₂, from about 2% to about 11% TiO₂, from about 1.5% to about 6% K₂O, from about 1% to about 4% MoO₃, from about 0.3% to about 13% Na₂O, up to about 2% NiO, up to about 3% Al₂O₃, up to about 2.9% MnO, up to about 0.8% CoO, up to about 3% MgO, up to about 5% CaO, and up to about 2% Sb₂O₃. The composition can be applied by wet or dry application techniques and can further comprise additional frits, pigments, mill additions, and vehicles.

The foregoing and other features of the invention are hereinafter more fully described and particularly pointed out in the claims, the following description setting forth in detail certain illustrative embodiments of the invention, these being indicative, however, of but a few of the various ways in which the principles of the present invention may be employed.

### Detailed Description of Preferred Embodiments

As noted above, the present invention provides a composition for use in forming an opaque porcelain enamel coating that does not require the presence of cerium oxide to obtain opacity. The composition according to the present invention obtains opacity via an interaction between molybdenum oxide and barium oxide, strontium oxide, or a combination of barium and strontium oxides. It has been observed that the opacification obtained via the interaction between molybdenum and barium is somewhat superior to the opacification obtained via the interaction between molybdenum and strontium. However, strontium can be used as a substitute and/or replacement for some or all of the barium in the composition. Other opacifiers are not necessary, and their use should generally be avoided for reasons such as cost, potential degradation of the acid resistance of the enamel, and/or degradation of the adhesion strength of the enamel coating.

In a preferred embodiment, the composition according to the present invention is cerium-free. Throughout the instant specification and in the appended claims, the term "cerium-free" means that no cerium oxide or precursors to cerium oxide have been intentionally added to the composition, and that any trace amounts of cerium oxide that may be present in the composition account for less than 0.1% of the composition by weight. Although cerium oxide is not needed to obtain an opaque enamel and a cerium-free composition is preferred, it will be appreciated that the composition can comprise some cerium oxide, if desired.

The composition according to the invention comprises a glass component. The glass component comprises one or more glass frits comprising by weight from about 45% to about 55% SiO₂, from about 8% to about 17% B₂O₃, from about 1.8% to about 17.7% SrO + BaO, from about 1.9% to about 10% Li₂O, up to about 6% ZrO₂, from about 2% to about 11 % TiO₂, from about 1.5% to about 6% K₂O, from about 1% to about 4% MoO₃, from about 0.3% to about 13% Na₂O, up to about 2% NiO, up to about 3% Al₂O₃, up to about 2.9% MnO, up to about 0.8% CoO, up to about 3% MgO, up to about 5% CaO, and up to about 2% Sb₂O₃. More preferably, the glass component comprises by weight from about 47.7% to about 54.1% SiO₂, from about 8.0% to about 16.1% B₂O₃, from about 1.9% to about 16.7% SrO + BaO, from about 5.0% to about 6.0% Li₂O, up to about 6.0% ZrO₂, from about 2.9% to about 9.0% TiO₂, from about 1.9% to about 4.9% K₂O, from about 1.0% to about 3.0% MoO₃, from about 2.3% to about 7.3% Na₂O, up to about 2.0% NiO, up to about 2.5% Al₂O₃, up to about 1.0% MnO, and up to about 0.8% CoO. It will be appreciated that the composition can further comprise various amounts of F and NOₓ to aid in smelting.

The glass component may be prepared utilizing conventional glass melting techniques and conventional raw materials. On a laboratory scale, selected oxides are typically smelted at temperatures of from about 1200°C to about 1400°C for about 30 to 45 minutes. Smelting temperatures and times are not critical, and may be adjusted depending upon the composition of the raw materials being used. The molten glass can be converted to frit using water-cooled steel rollers or by water quenching. It will be appreciated that the step of producing the glass component is not per se critical and that any of the various techniques well-known to those skilled in the art can be employed.

The composition according to the invention can be applied by wet or dry application techniques, which are well known. When applied by a dry application technique, the frit(s), an organopolysiloxane, and optionally pigments are typically milled together to a desired fineness. Milling fineness is not per se critical. For example, a milling fineness of about 5% to about 20% residue being retained on a 325 mesh sieve as determined using ASTM Standard C285-88 can be used when the composition is applied by dry electrostatic spraying.

After milling to the desired fineness, the composition can be applied using conventional dry application equipment such as, for example, a corona discharge gun, which is well known in the art. The application rate of the composition by dry electrostatic processes will vary widely according to the desired thickness of the resultant enamel cover coat. Typical application rates are from about 175 g/m² to about 500 g/m² to produce a porcelain enamel coating thickness of about 70 µm to about 200 µm.

As noted above, the composition according to the present invention can also be applied by any of the known wet application processes such as spraying, dipping, flow coating, and electrodeposition. When applied by a wet application technique, the frit or frits comprising the glass component are preferably milled together with optional mill additions and vehicles to a suitable fineness for the particular application technique being employed. As previously noted above with respect to dry application processes, milling fineness and techniques are not per se critical. For example, a milling fineness of about 2 cm³ being retained from a 50 cm³ sample on a 200 mesh sieve can be used when the composition is to be applied by wet spraying.

When the composition is applied using a wet application technique, the composition is preferably permitted to dry before it is fired. Drying times and conditions are not per se critical. The application rate of the composition by wet application processes will vary widely depending upon the desired thickness of the resulting fired enamel coating. Typical wet application rates are from about 250 g/m² to about 600 g/m².

The composition can further comprise one or more mill additions, which are well known in the art. Suitable mill additions include, for example, clay, bentonite, magnesium carbonate, sodium nitrite, potassium silicate, and pigments. There is practically no limit on the amount of mill additions that can be present in the composition, but it is generally preferred that the amount of mill additions present in the composition be the least necessary to obtain a good wet suspension. The preferred vehicle for use in the invention is water, but other conventional vehicles can be used.

The composition according to the invention is particularly suitable for use as a ground coat, i.e., a one-coat-one-fire coating, on metal substrates such as, for example, degreased-only enameling grade steel. The composition can also be applied to decarburized steel and stainless steel that has been prepared for enameling. The bond formed between the fired enamel and cleaned-only metal is acceptable for most applications. The composition can also be used as a cover coat over fired or unfired ground coated substrates, but this is not the preferred use of the composition.

The composition according to the present invention is typically fired at a temperature of from about 760°C to about 880°C for about 3 minutes to about 8 minutes depending upon factors such as the thickness of the applied coating and the composition of the substrate. It will be appreciated that firing times and temperatures are not per se critical, and a wide range of firing schedules can be used.

Upon firing, the composition according to the present invention forms a porcelain enamel coating that generally exhibits a uniform grey opaque appearance. The minimum and maximum CIE L*a*b* uniform color space values obtained for fired porcelain enamel coatings formed by dry application of the composition (without pigments) are: L* = 32 to 53; a* = -2.5 to -0.3; and b* = -6.2 to 0.3. It will be appreciated that a range of colors can be obtained through the use of varying amounts of one or more mill added pigments.

The opaque porcelain enamel coating obtained upon firing exhibits an acid resistance of A or better according to ISO 2722. Moreover, the coating exhibits good easy-to-clean properties. Throughout the instant specification and in the appended claims, the term "easy-to-clean" means that the porcelain enamel coating passes the Easy-To-Clean Test described in detail below:

### Easy-To-Clean Test

In order to objectively compare the ease from which baked-on food can be removed from fired porcelain enamel coatings, the Easy-To-Clean Test was developed. Three materials are used in the test: a cold citric acid solution (100 g/l), which is the same solution as used in the ISO 2722 standard; LiNO₃ powder (purity >99%); and a ketchup sauce solution (20% in water). First, the citric acid solution is applied to the porcelain enamel coated steel plate in three testing locations and allowed to stand for 15 minutes. The citric acid solution is then wiped from the porcelain enamel coating, which is evaluated according to same grading criteria as the ISO 2722 standard. The coating must demonstrate an acid resistance of A for the testing to continue. While a cold citric acid resistance of A is acceptable, a cold citric acid resistance of AA is preferred.

Second, two of the locations previously tested with the citric acid solution are coated with a sufficient quantity of LiNO₃ powder to cover the testing area. The enameled steel plate is then placed in a furnace at 320°C for 15 minutes. After cooling to room temperature, the residue is removed with water. The two testing areas are again evaluated according to same grading criteria as the ISO 2722 standard. The coating must pass at A (no visible marks or discoloration) for the testing to continue. Again, while an A grading is acceptable, a grading of AA is preferred.

Third, one of the two locations previously tested with LiNO₃ powder is coated with a sufficient quantity of the ketchup solution to completely cover the testing area. The plate is again placed in the furnace at 320°C for fifteen minutes. After cooling to room temperature, the residue is cleaned using a sponge and a commercial detergent solution. In order to pass the Easy-To-Clean Test, the porcelain enamel coating must not exhibit any visible marks or discoloration after all three tests.

The fired porcelain enamel coating is scratch resistant, stain resistant, and maintains its easy-to-clean properties over many heating cycles. Thus, the enamel composition according to the invention is particularly well-suited for application on the interior surfaces of oven cavities, dripping pans, cookware, and other articles that are exposed to the risk of baked-on food soiling.

### Examples

The following examples are intended only to illustrate the invention and should not be construed as imposing limitations upon the claims.

### Example I

Glass Frit Composition 1 was prepared by smelting selected oxides in a smelting pot at about 1300 to about 1350°C for about 30 to about 45 minutes and then converting the molten glass to frit using water cooled rollers in order to obtain a frit having a composition as shown in **Table 1** below:

**Table 1**

| **Component** | **Wt. %** |
|---|---|
| SiO₂ | 50.9 |
| B₂O₃ | 15.0 |
| BaO | 8.0 |
| Li₂O | 5.0 |
| ZrO₂ | 5.0 |
| TiO₂ | 4.0 |
| K₂O | 3.5 |
| MoO₃ | 3.0 |
| Na₂O | 2.3 |
| NiO | 1.1 |
| Al₂O₃ | 1.0 |
| MnO | 0.8 |
| CoO | 0.4 |

### Example 2

Porcelain Enamel Compositions A, B, C, D, and E were each prepared by blending 50 parts by weight of Glass Frit Composition 1 from **Example 1** with 50 parts by weight of a glass frit available from Ferro Corporation under the trade designation M3906 and the amounts of the pigments specified in **Table 2** below. The frits, pigments, and 0.2 parts by weight of an organopolysiloxane were milled together in a ball mill to a fineness of 10% ± 0.5% residue on a 325 mesh sieve as determined using ASTM Standard C285-88. After milling, Porcelain Enamel Compositions A, B, C, D, and E were each separately applied to degreased-only sheet steel plates using a corona discharge gun at about 75 kV. The application rate was about 400 g/m². The coated steel plates were fired in a furnace at about 815°C for about 4 minutes. After firing, the thickness of the porcelain enamel coating was about 125 µm. Each of the porcelain enameled plates exhibited an acid resistance of A according to ISO 2722 and passed the Easy-To-Clean Test. CIE L*a*b* uniform color space values obtained for the enamel compositions is reported in **Table 2** below:

**Table 2**

| **Porcelain Enamel Composition** | **Frit Composition A** | **Frit M3906** | **Pigment** | **L*** | **a*** | **b*** |
|---|---|---|---|---|---|---|
| A | 50 g | 50 g | Blue FK9254 0.4 g Brown FK1159 0.4 g Black FK3008 0.1 g | 38.10 | -0.55 | -3.31 |
| B | 50 g | 50 g | Blue FK9254 1.0 g | 37.04 | -0.46 | -5.00 |
| C | 50 g | 50 g | Black FK3126 1.0 g | 33.76 | -0.92 | -2.42 |
| D | 50 g | 50 g | Green FK8486 1.0 g | 38.45 | -3.86 | 0.95 |
| E | 50 g | 50 g | Brown FK1159 1.0 g | 35.97 | 0.33 | -2.15 |

### Example 3

100 g of Glass Frit Composition 1 from **Example 1** was blended with 1 g clay, 0.3 g magnesium carbonate, 0.3 g sodium nitrite, 0.3 g K27 (bentonite), and 40 g deionized distilled water and milled to a fineness of 2 cm³ being retained from a 50 cm³ sample on a 200 mesh sieve. The resulting base slip was applied to a degreased decarburized sheet steel blank at a rate of 400 g/m². The enamel was dried under a heating lamp and then fired for 3.5 minutes at 850°C. The porcelain enamel coating displayed an acid resistance of A according to ISO 2722 and passed the Easy-To-Clean Test. The CIE L*a*b* uniform color space values for the porcelain enamel coating were: L* = 40.22; a* = 0.06; and b* = -3.51.

### Example 4

Porcelain Enamel Compositions F, G, H, and I were prepared by milling 100 g of the base slip obtained in **Example 3** with 1 gram of the various pigments shown in **Table 3.** Porcelain Enamel Compositions F, G, H, and I were separately applied to degreased decarburized sheet steel blanks at a rate of 400 g/m². The enamels were dried under a heating lamp and then fired for 3.5 minutes at 850°C. Each of the porcelain enamel coatings displayed an acid resistance of A according to ISO 2722 and passed the Easy-To-Clean Test. The color attributes for the porcelain enamel coatings are shown in **Table 3** below:

**Table 3**

| **Porcelain Enamel Composition** | **Pigment** | **L*** | **a*** | **b*** |
|---|---|---|---|---|
| F | Blue FK9254 | 37.50 | 1.14 | -8.87 |
| G | Black FK3126 | 34.62 | -0.24 | -1.86 |
| H | Green FK8486 | 39.15 | -2.66 | 1.11 |
| I | Brown FK1159 | 38.76 | 1.13 | -2.33 |

### Example 5

Glass Frit Compositions 2, 3, and 4 were prepared by smelting selected oxides in a smelting pot at about 1300 to about 1350°C for about 30 to about 45 minutes and then converting the molten glass to frit using water cooled rollers in order to obtain a frit having a composition as shown in **Table 4** below:

**Table 4**

| **Component** | **Frit Composition 2** | **Frit Composition 3** | **Frit Composition 4** |
|---|---|---|---|
| | **Wt. %** | **Wt. %** | **Wt. %** |
| SiO₂ | 51.9 | 52.9 | 47.7 |
| B₂O₃ | 12.9 | 12.3 | 15.0 |
| BaO | 2.3 | 1.9 | 8.0 |
| SrO | 5.6 | 5.8 | 2.0 |
| Li₂O | 5.2 | 5.1 | 5.5 |
| ZrO₂ | 4.9 | 5.1 | 4.0 |
| TiO₂ | 4.1 | 4.0 | 4.0 |
| K₂O | 2.0 | 1.9 | 2.0 |
| MoO₃ | 3.0 | 2.9 | 3.0 |
| Na₂O | 3.3 | 3.2 | 4.3 |
| NiO | 1.2 | 1.2 | 2.0 |
| Al₂O₃ | 2.3 | 2.5 | 2.0 |
| MnO | 0.8 | 0.7 | -- |
| CoO | 0.5 | 0.5 | 0.5 |

### Example 6

Porcelain Enamel Compositions J, K, and L were each prepared by milling 100 parts by weight of Glass Frit Compositions 2, 3, and 4, respectively, from **Example 5** and 0.2 parts by weight of an organopolysiloxane in a ball mill to a fineness of 10% ± 0.5% residue on a 325 mesh sieve as determined using ASTM Standard C285-88. After milling, Porcelain Enamel Compositions J, K, and L were each separately applied to degreased-only sheet steel plates using a corona discharge gun at about 75 kV. The application rate was about 400 g/m². The coated steel plates were fired in a furnace at about 815°C for about 4 minutes. After firing, the thickness of the porcelain enamel coating was about 125 µm. Each of the porcelain enameled plates exhibited an acid resistance of A according to ISO 2722 and passed the Easy-To-Clean Test. CIE L*a*b* uniform color space values obtained for the enamel compositions is reported in **Table 5** below:

**Table 5**

| **Porcelain Enamel Composition** | **L*** | **a*** | **b*** |
|---|---|---|---|
| J | 46.60 | -1.47 | -4.39 |
| K | 45.19 | -1.41 | -4.09 |
| L | 50.26 | -1.96 | -0.35 |

Additional advantages and modifications will readily occur to those skilled in the art. Therefore, the invention in its broader aspects is not limited to the specific details and illustrative examples shown and described herein. Accordingly, various modifications may be made without departing from the spirit or scope of the general inventive concept as defined by the appended claims and their equivalents.

## Claims

1. A composition for use in forming an opaque porcelain enamel coating on a metal substrate, said composition comprising a glass component comprising by weight from about 45% to about 55% SiO₂, from about 8% to about 17% B₂O₃, from about 1.8% to about 17.7% SrO + BaO, from about 1.9% to about 10% Li₂O, up to about 6% ZrO₂, from about 2% to about 11% TiO₂, from about 1.5% to about 6% K₂O, from about 1% to about 4% MoO₃, from about 0.3% to about 13% Na₂O, up to about 2% NiO, up to about 3% Al₂O₃, up to about 2.9% MnO, up to about 0.8% CoO, up to about 3% MgO, up to about 5% CaO, and up to about 2% Sb₂O₃.

2. The composition according to claim 1 wherein said glass component comprises by weight from about 47.7% to about 54.1% SiO₂, from about 8.0% to about 16.1% B₂O₃, from about 1.9% to about 16.7% SrO + BaO, from about 5.0% to about 6.0% Li₂O, up to about 6.0% ZrO₂, from about 2.9% to about 9.0% TiO₂, from about 1.9% to about 4.9% K₂O, from about 1.0% to about 3.0% MoO₃, from about 2.3% to about 7.3% Na₂O, up to about 2.0% NiO, up to about 2.5% Al₂O₃, up to about 1.0% MnO, and up to about 0.8% CoO.

3. The composition according to claim 1 wherein said glass component comprises by weight about 50.9% SiO₂, about 15.0% B₂O₃, about 8.0% BaO, about 5.0% Li₂O, about 5.0% ZrO₂, about 4.0% TiO₂, about 3.5% K₂O, about 3.0% MoO₃, about 2.3% Na₂O, about 1.1% NiO, about 1.0% Al₂O₃, about 0.8% MnO, and about 0.4% CoO.

4. The composition according to claim 1 wherein said glass component comprises by weight about 51.9% SiO₂, about 12.9% B₂O₃, about 2.3% BaO, about 5.6% SrO, about 5.2% Li₂O, about 4.9% ZrO₂, about 4.1% TiO₂, about 2.0% K₂O, about 3.0% MoO₃, about 3.3% Na₂O, about 1.2% NiO, about 2.3% Al₂O₃, about 0.8% MnO, and about 0.5% CoO.

5. The composition according to claim 1 wherein said glass component comprises by weight about 52.9% SiO₂, about 12.3% B₂O₃, about 1.9% BaO, about 5.8% SrO, about 5.1% Li₂O, about 5.1% ZrO₂, about 4.0% TiO₂, about 1.9% K₂O, about 2.9% MoO₃, about 3.2% Na₂O, about 1.2% NiO, about 2.5% Al₂O₃, about 0.7% MnO, and about 0.5% CoO.

6. The composition according to claim 1 wherein said glass component comprises by weight about 47.7% SiO₂, about 15.0% B₂O₃, about 8.0% BaO, about 2.0% SrO, about 5.5% Li₂O, about 4.0% ZrO₂, about 4.0% TiO₂, about 2.0% K₂O, about 3.0% MoO₃, about 4.3% Na₂O, about 2.0% NiO, about 2.0% Al₂O₃, and about 0.5% CoO.

7. The composition according to claim 1 further comprising at least one mill addition and a vehicle.

8. The cerium-free composition according to claim 7 wherein said metal substrate is steel.

9. The cerium-free composition according to claim 8 wherein said steel has been degreased only.
